(19) Europäisches Patentamt
European Patent Office
Office européen des brevets

(11) **EP 3 721 549 B1**

(12) **FASCICULE DE BREVET EUROPEEN**

(45) Date de publication et mention de la délivrance du brevet:
**30.03.2022   Bulletin 2022/13**

(21) Numéro de dépôt: **18804018.2**

(22) Date de dépôt: **23.11.2018**

(51) Classification Internationale des Brevets (IPC):
***H02S 50/00*** *(2014.01)*      ***H02S 50/10*** *(2014.01)*

(52) Classification Coopérative des Brevets (CPC):
**H02S 50/00; H02S 50/10;** Y02E 10/50

(86) Numéro de dépôt international:
**PCT/EP2018/082342**

(87) Numéro de publication internationale:
**WO 2019/110326 (13.06.2019 Gazette 2019/24)**

(54) **DETECTION A DISTANCE D'UNE ANOMALIE AFFECTANT UNE INSTALLATION PHOTOVOLTAIQUE**

FERNERKENNUNG EINER EINE FOTOVOLTAIKANLAGE BEEINFLUSSENDEN ANOMALIE

REMOTE DETECTION OF AN ANOMALY AFFECTING A PHOTOVOLTAIC INSTALLATION

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **07.12.2017   FR 1761756**

(43) Date de publication de la demande:
**14.10.2020   Bulletin 2020/42**

(73) Titulaire: **Electricité de France**
**75008 Paris (FR)**

(72) Inventeurs:
• **CHARPENTIER, Philippe**
**78830 Bullion (FR)**
• **MEVEL, Camille**
**29200 BREST (FR)**

(74) Mandataire: **Plasseraud IP**
**66, rue de la Chaussée d'Antin**
**75440 Paris Cedex 09 (FR)**

(56) Documents cités:
**EP-A1- 3 016 276      EP-A1- 3 016 277**
**US-A1- 2010 185 337**

**Description**

La présente invention concerne la détection à distance d'une anomalie qui affecte le fonctionnement d'une installation photovoltaïque de production d'électricité. Le document EP3016277A décrit un procédé de détection d'anomalie d'un système photovoltaïque.

La production d'électricité à partir d'une installation photovoltaïque peut être perturbée par de nombreuses causes, y compris des accumulations de salissures et de détritus sur les panneaux photovoltaïques, des pannes de l'installation pouvant concerner les panneaux eux-mêmes mais aussi des composants électriques qui leur sont associés, l'apparition de nouveaux éléments dans l'environnement qui provoquent un ombrage des panneaux, etc. Il en résulte des baisses dans la production d'électricité de l'installation photovoltaïque, qui peuvent être particulièrement pénalisantes lors de journées ensoleillées mais froides. De telles baisses sont pénalisantes à la fois pour le propriétaire de l'installation photovoltaïque à cause du défaut de puissance électrique à vendre, mais aussi pour un fournisseur d'électricité par réseau de distribution à cause d'une puissance électrique manquante qui pourrait devoir être achetée à d'autres fournisseurs.

Or l'apparition de telles causes de perturbations peut être difficile à détecter, causant des pertes de production qui sont susceptibles de durer plusieurs jours, voire plusieurs semaines.

En outre, une fois que l'existence d'une perturbation a été détectée pour une installation photovoltaïque, identifier la ou les cause(s) de cette perturbation peut être difficile. Or il est particulièrement important, pour des raisons économiques, de diminuer au maximum la nécessité de missionner un technicien sur le site de l'installation photovoltaïque pour identifier la cause de perturbation. En effet, les installations photovoltaïques sont en général très réparties géographiquement, si bien que le déplacement d'un technicien sur une installation particulière possède un coût élevé. Il y a donc un enjeu économique important à pouvoir détecter à distance une perturbation qui affecte nouvellement une installation photovoltaïque identifiée, et à pouvoir diagnostiquer la cause de cette perturbation.

Pour cela, il est connu de transmettre à une plateforme de surveillance, des mesures qui sont effectuées répétitivement, de la production d'électricité de chaque installation photovoltaïque, afin d'étudier leur évolution et tenter d'en déduire la survenue de perturbations. Usuellement, ces valeurs mesurées sont comparées à des valeurs théoriques qui sont produites par un simulateur selon un modèle déterministe. Mais une telle approche est inadaptée, car la production d'électricité par une installation photovoltaïque est soumise à de nombreux aléas, notamment d'origine météorologique, et dépend de paramètres de l'installation qui ne sont pas forcément connus pour être pris en compte dans le modèle de simulation. Parmi ces paramètres d'installation figurent le lieu de chaque installation photovoltaïque, la surface de panneaux installée, l'orientation des panneaux photovoltaïques par rapport au sud, leur inclinaison par rapport à la direction verticale, la technologie et le fabricant des panneaux, etc. La détection de perturbations à partir de comparaisons entre les mesures de production d'électricité qui sont collectées et les résultats d'un tel modèle déterministe aboutit alors à un taux de fausse alarme qui est très élevé. Autrement dit, de telles méthodes de détection de perturbations à partir de modèles déterministes ne sont pas fiables.

A partir de cette situation, un but de l'invention est de proposer un nouveau procédé de détection à distance d'anomalies qui affectent le fonctionnement d'une installation photovoltaïque, dont le niveau de fiabilité est amélioré par rapport aux procédés de détection antérieurs.

Un but annexe de l'invention est d'identifier à distance au moins une cause probable pour chaque anomalie qui est détectée dans le fonctionnement d'une installation photovoltaïque.

Pour atteindre l'un au moins de ces buts ou d'autres, un premier aspect de l'invention propose un procédé selon la revendication 1, pour détecter à distance une anomalie qui affecte un fonctionnement d'une installation photovoltaïque de production d'électricité, dite installation surveillée, ce procédé comprenant au moins une étape lors de laquelle des valeurs de production d'électricité qui sont mesurées pour cette installation surveillée sont comparées avec des valeurs qui sont déduites de mesures effectuées pour plusieurs autres installations photovoltaïques de production d'électricité, dites installations voisines et différentes de l'installation surveillée.

Ainsi, le procédé de détection de l'invention peut prendre en compte des contributions à des variations aléatoires de production d'électricité, qui sont communes à des installations photovoltaïques voisines géographiquement. Une partie des causes de variation de la production d'électricité qui affectent l'installation surveillée peut donc être prise en compte de cette façon, notamment une partie des causes aléatoires, si bien que le procédé de détection de l'invention possède un niveau de fiabilité amélioré. En outre, ce niveau de fiabilité est d'autant plus élevé qu'un nombre plus grand d'installations photovoltaïques voisines sont prises en compte.

De façon générale, le procédé de l'invention peut comprendre en outre de rechercher si plusieurs critères de détection d'anomalie sont satisfaits par les valeurs de production d'électricité qui sont mesurées pour l'installation surveillée, et en fonction de ceux de ces critères qui sont satisfaits, proposer au moins une cause possible pour l'anomalie. En particulier, la proposition de cause possible d'anomalie peut utiliser une base d'apprentissage qui associe des causes d'anomalies différentes à des combinaisons différentes des critères satisfaits.

Eventuellement, le procédé de l'invention peut encore comprendre de commander ou réaliser une intervention de maintenance ou de modification environnementale pour l'installation surveillée, sur un site ou dans un voisinage de cette installation surveillée, si une anomalie est détectée.

De façon générale, le procédé de l'invention peut comprendre les étapes suivantes :

/1/ pendant une période d'apprentissage, collecter les valeurs de production d'électricité qui ont été mesurées pour l'installation surveillée et pour les installations voisines ;

/2/ à partir des valeurs de production d'électricité qui ont été mesurées pour les installations voisines, déterminer une fonction d'estimation de la production d'électricité pour l'installation surveillée, ayant le temps comme variable, en minimisant un écart total qui est calculé sur la période d'apprentissage entre les valeurs de production d'électricité mesurées pour l'installation surveillée et des valeurs estimées obtenues par la fonction d'estimation ;

/3/ pour au moins un instant postérieur à la période d'apprentissage, collecter de nouvelles valeurs de production d'électricité qui sont mesurées pour l'installation surveillée et pour chaque installation voisine ;

/4/ pour chaque instant postérieur à la période d'apprentissage qui est concerné par l'étape /3/, calculer au moins une valeur estimée de production d'électricité en utilisant la fonction d'estimation qui a été déterminée à l'étape /2/ ; et

/5/ déclarer qu'une anomalie est détectée dans le fonctionnement de l'installation surveillée à partir d'une comparaison, pour au moins un instant postérieur à la période d'apprentissage, entre la valeur estimée de production d'électricité qui a été calculée à l'étape /4/ et la nouvelle valeur de production d'électricité qui a été mesurée puis collectée à l'étape /3/ pour l'installation surveillée.

De cette façon, le procédé de l'invention résulte d'une comparaison entre la production d'électricité de l'installation surveillée et un modèle pour cette production d'électricité qui est établi à partir des installations voisines de l'installation surveillée. Et une anomalie est déclarée pour l'installation surveillée lorsque la production d'électricité qui est mesurée pour celle-ci devient trop différente d'un résultat fourni par le modèle.

Eventuellement, les nouvelles valeurs de production d'électricité mesurées qui sont collectées à l'étape /3/ peuvent en outre être utilisées ultérieurement pour rallonger la période d'apprentissage. Elles peuvent alternativement être utilisées aussi pour former une période d'apprentissage glissante dans le temps, qui incorpore alors automatiquement de nouvelles dérives de production susceptibles d'affecter l'installation photovoltaïque surveillée et/ou ses voisines, dans la mesure où de telles dérives sont progressives.

Dans des modes préférés de mise en œuvre de l'invention, la fonction d'estimation qui est déterminée à l'étape /2/ peut comprendre une combinaison linéaire de fonctions de production d'électricité qui sont relatives respectivement aux installations voisines, et qui correspondent aux valeurs de production d'électricité qui ont été mesurées pour ces installations voisines pendant la période d'apprentissage, avec des facteurs de combinaison linéaire qui sont tous positifs ou nuls, et avec une somme desdits facteurs de combinaison linéaire qui est inférieure ou égale à une valeur maximale fixée. En outre, les facteurs de combinaison linéaire peuvent être déterminés pour minimiser l'écart total qui est calculé sur la période d'apprentissage entre les valeurs de production d'électricité mesurées pour l'installation surveillée et les valeurs estimées.

Pour un premier critère de détection d'anomalie, la comparaison de l'étape /5/ peut être effectuée en exécutant les sous-étapes suivantes :

/5-1/ déterminer un intervalle de confiance de prédiction pour chaque valeur estimée de production d'électricité qui a été calculée à l'étape /4/ ;

/5-2/ déterminer si la nouvelle valeur de production d'électricité mesurée qui a été collectée à l'étape /3/ pour l'installation surveillée, et qui correspond à un même instant que la valeur estimée de la sous-étape /5-1/, est à l'extérieur de l'intervalle de confiance de prédiction relatif à cette valeur estimée ; et

/5-3/ répéter les sous-étapes /5-1/ et /5-2/ pour plusieurs instants à l'intérieur d'une première période de test, puis compter un premier nombre d'instants dans la première période de test, pour chacun desquels instants la nouvelle valeur de production d'électricité mesurée pour l'installation surveillée est à l'extérieur de l'intervalle de confiance de prédiction correspondant.

Alors, selon le premier critère, une anomalie dans le fonctionnement de l'installation surveillée peut être déclarée si le premier nombre d'instants est supérieur à un premier seuil prédéfini.

Possiblement, le procédé de l'invention peut aussi comprendre les étapes suivantes, pour un deuxième critère de détection d'anomalie :

/6/ corriger les valeurs de production d'électricité qui sont mesurées pour chaque installation voisine par rapport à une puissance électrique nominale de cette installation voisine, et proportionnellement à une puissance électrique nominale de l'installation surveillée ;

/7/ sélectionner un sous-ensemble parmi les installations voisines, qui correspond à une proportion prédéterminée de celles-ci et qui est formé par celles de ces installations voisines qui possèdent des productions d'électricité les plus basses, déterminées à partir des valeurs de production d'électricité mesurées puis corrigées ; et

/8/ compter un second nombre d'instants dans une deuxième période de test, pour chacun desquels instants la valeur de production d'électricité qui est mesurée pour l'installation surveillée est inférieure ou égale à une valeur moyenne des valeurs de production d'électricité mesurées puis corrigées du sous-ensemble d'installations voisines.

Alors, selon le deuxième critère, une anomalie dans le fonctionnement de l'installation surveillée est aussi déclarée si le second nombre d'instants qui a été compté à l'étape /8/ est supérieur à un deuxième seuil prédéfini. La deuxième période de test peut être une partie au moins de la période d'apprentissage, et/ou comprendre au moins un intervalle de temps qui est postérieur à la période d'apprentissage.

Pour un troisième critère de détection d'anomalie, le procédé peut comprendre les étapes /1/ à /4/ mentionnées plus haut, et comprendre en plus les étapes suivantes :

/9/ pour plusieurs instants à l'intérieur d'une troisième période de test, calculer des résultats de soustraction d'une valeur de production d'électricité qui est calculée en utilisant la fonction d'estimation déterminée à l'étape /2/, à la valeur de production d'électricité mesurée pour l'installation surveillée, ces valeurs pour calculer chaque résultat de soustraction étant relatives à un même instant dans la troisième période de test ;

/10/ déterminer des durées de marche, pendant chacune desquelles durées de marche les résultats de soustraction présentent une valeur de moyenne temporelle qui est différente de celles de la durée de marche précédente et de la durée de marche suivante, et avec une variance des résultats de soustraction qui est minimale à l'intérieur de chaque durée de marche ; et

/11/ compter un nombre de durées de marche à l'intérieur de la troisième période de test, pour chacune desquelles durées de marche la valeur de moyenne temporelle des résultats de soustraction est négative.

Alors, selon le troisième critère, une anomalie dans le fonctionnement de l'installation surveillée est aussi déclarée si, pendant la troisième période de test, le nombre de durées de marche à valeurs de moyenne temporelle négatives pour les résultats de soustraction est supérieur à un troisième seuil prédéfini. La troisième période de test peut être une partie au moins de la période d'apprentissage, et/ou comprendre au moins un intervalle de temps qui est postérieur à la période d'apprentissage. Un tel troisième critère est particulièrement adapté pour révéler des baisses de production d'électricité qui affectent l'installation photovoltaïque qui est surveillée.

Enfin, pour un quatrième critère de détection d'anomalie, le procédé peut comprendre en outre les étapes suivantes :

/12/ rechercher s'il existe un instant diurne auquel un minimum se produit pour les valeurs de production d'électricité qui sont mesurées pour l'installation surveillée, pour au moins un jour de fonctionnement de cette installation surveillée ; et

/13/ rechercher si un minimum se produit aussi pendant plusieurs jours successifs après le jour identifié à l'étape /12/, pour les valeurs de production d'électricité qui sont mesurées pour l'installation surveillée, chaque fois dans un intervalle de temps prédéfini autour de l'instant diurne identifié à l'étape /12/, et compter le nombre de jours successifs pour lesquels un tel minimum se produit.

Alors selon le quatrième critère, une anomalie dans le fonctionnement de l'installation surveillée est aussi déclarée si le nombre de jours successifs qui a été compté à l'étape /13/ est supérieur à un quatrième seuil prédéfini.

De façon générale, la vérification de plusieurs des critères précédents peut permettre de confirmer la présence d'une anomalie dans le fonctionnement de l'installation surveillée, voire permettre de déterminer des causes possibles pour cette anomalie détectée.

Un second aspect de l'invention propose un système de surveillance d'au moins une installation photovoltaïque, dite installation surveillée, ce système de surveillance comprenant :

- des moyens de communication pour collecter des valeurs de production d'électricité qui ont été mesurées pour l'installation surveillée et pour d'autres installations photovoltaïques, dites installations voisines, différentes de l'installation surveillée ; et

- des moyens de calcul pour mettre en œuvre un procédé de détection à distance d'une anomalie qui affecte un fonctionnement de l'installation surveillée, ce procédé étant conforme au premier aspect de l'invention.

D'autres particularités et avantages de la présente invention apparaîtront dans la description ci-après d'exemples de réalisation non limitatifs, en référence aux dessins annexés, dans lesquels :

- la figure 1 montre un ensemble d'installations photovoltaïques auquel l'invention peut être appliquée, ainsi qu'un système de surveillance conforme à l'invention ; et

- les figures 2 à 5 montrent des étapes d'un procédé conforme à l'invention, respectivement pour appliquer des critères différents de détection d'anomalie concernant le fonctionnement d'une des installations photovoltaïques de la figure 1.

Dans ces figures, des références identiques désignent des éléments ou des étapes identiques, ou dont les fonctions sont identiques.

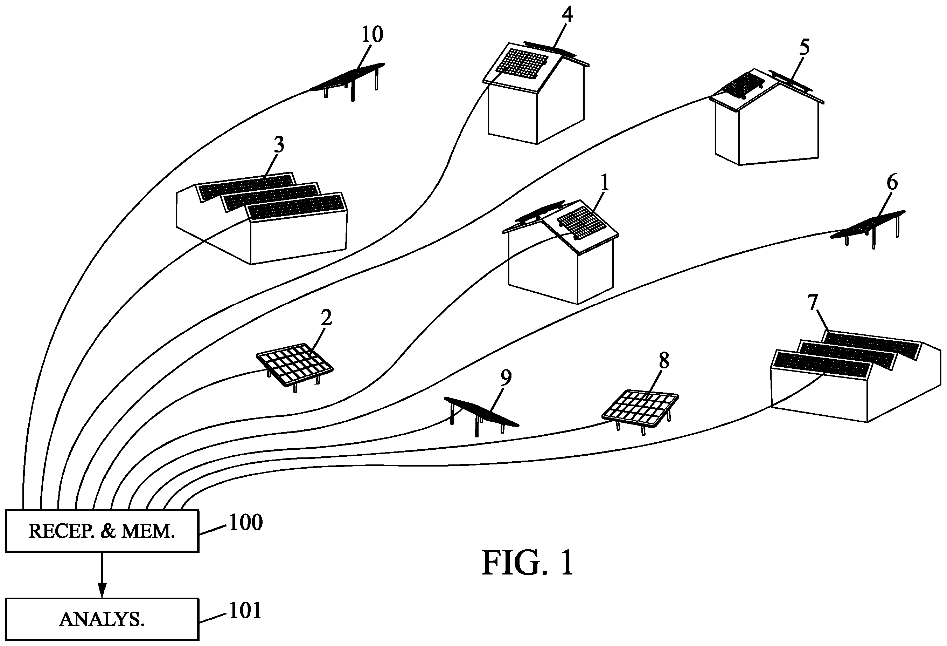

La figure 1 montre N installations photovoltaïques identifiées, N étant un nombre entier naturel supérieur ou égal à 2, par exemple référencées de 1 à 10, dont les conditions d'installation peuvent varier d'une installation à l'autre : en toitures, sur pieds fixes, avec des surfaces installées de panneaux qui sont variables, des orientations variables par rapport au sud, des inclinaisons qui peuvent aussi être variables, etc. En outre, la technologie et le fabricant des panneaux photovoltaïques peuvent aussi varier entre des installations différentes. Chaque installation photovoltaïque est connectée à un réseau de distribution électrique (non représenté) pour transmettre la puissance électrique qu'elle fournit, et un compteur intermédiaire effectue des mesures de cette puissance électrique fournie. Des valeurs mesurées de production d'électricité sont ainsi générées pour chaque installation photovoltaïque, individuellement et de façon répétée, puis transmises à une plateforme de réception et de mémorisation 100, qui est notée RECEP. & MEM. Le mode de transmission de ces valeurs mesurées, à partir d'un point de connexion au réseau de chaque installation photovoltaïque, peut être quelconque. Pour mettre en œuvre le procédé de détection d'anomalie qui est proposé par l'invention, un module d'analyse 101, noté ANALYS., est associé à la plateforme 100, et programmé pour appliquer aux valeurs de production d'électricité mesurées et transmises, les traitements qui sont décrits ci-après. Ces traitements ont pour but de détecter si une anomalie affecte le fonctionnement de l'une des installations photovoltaïques identifiées, par exemple l'installation 1, qui est donc appelée installation photovoltaïque surveillée. Pour cela, les valeurs de production d'électricité qui sont mesurées et collectées pour l'installation photovoltaïque 1 sont comparées à celles relatives à plusieurs autres des installations photovoltaïques. Le nombre de ces dernières installations utilisées comme références de comparaison n'a pas de limitation. Dans la pratique, il peut être de l'ordre d'une dizaine d'installations photovoltaïques ou plus, de préférence inférieur à cent, par exemple les installations photovoltaïques 2-10. La fiabilité du procédé de détection d'anomalie pour l'installation 1 qui est surveillée, est meilleure si les installations avec lesquelles ses valeurs mesurées de production d'électricité sont comparées, sont voisines géographiquement de l'installation 1. Pour cette raison, les installations photovoltaïques qui servent de références pour surveiller le fonctionnement de l'installation 1, ont été appelées installations voisines dans la partie générale de la présente description. L'Homme du métier comprendra que pour l'analyse statistique qui est mise en œuvre, le critère de voisinage n'a pas de limite stricte, mais a pour effet d'améliorer des corrélations temporelles entre les valeurs qui sont mesurées pour des installations photovoltaïques distinctes.

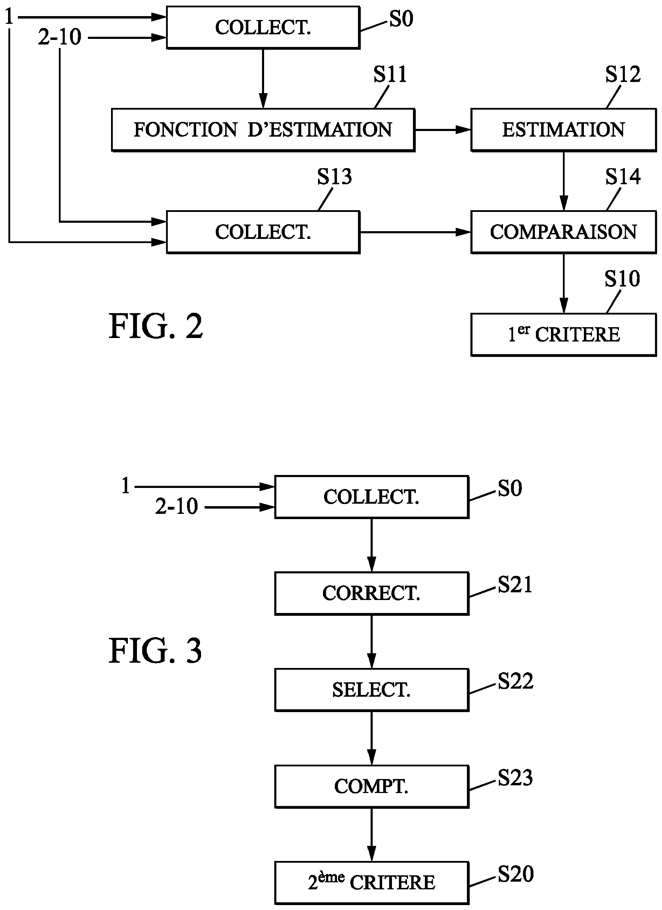

Dans les figures 2 à 5, la collecte des valeurs de production d'électricité qui ont été mesurées pour chacune des installations photovoltaïques 1 à 10, pendant une période d'apprentissage, est notée S0. Une telle collecte est répétée plusieurs fois dans la période d'apprentissage, préférablement pendant des périodes diurnes de plusieurs jours successifs de la période d'apprentissage, pour construire une base de données de valeurs mesurées. Par exemple, la période d'apprentissage peut regrouper entre 5 et 50 jours successifs. Cette base de données peut être mise à jour continuellement. Dans la suite, t désigne la variable de temps, pour repérer des instants auxquelles les valeurs de production d'électricité sont mesurées pour les installations photovoltaïques 1 à N.

Pour appliquer le premier critère de détection d'anomalie prévu par l'invention, les valeurs mesurées qui sont ainsi collectées pendant la période d'apprentissage (étape S0) sont utilisées pour établir un modèle de la production d'électricité de l'installation surveillée (étape S11 de la figure 2). Ensuite, des prédictions qui sont établies en appliquant ce modèle (étape S12) sont comparées à de nouvelles valeurs de production d'électricité de l'installation surveillée, qui sont mesurées postérieurement à la période d'apprentissage (étapes S13 et S14). De préférence, le modèle qui est utilisé peut être du type connu sous l'acronyme LASSO, pour «Least Absolute Shrinkage and Selection Operator», à coefficients positifs et bornés. Selon un tel modèle, les valeurs de production d'électricité de l'installation surveillée sont approchées par une combinaison affine des valeurs de production d'électricité des installations voisines :

$$P_1(t) = \beta_{1,0} + \sum_{i=2}^{i=N} \beta_{1,i} \cdot P_i(t) + \varepsilon_1(t)$$

où $P_i(t)$ est la valeur de production d'électricité qui est mesurée à l'instant t pour l'installation photovoltaïque i, l'indice entier i variant de 1 à N, i=1 correspondant à l'installation photovoltaïque qui est surveillée, i=2 à N correspondant aux installations photovoltaïques voisines de celle qui est surveillée, et la sommation formant une combinaison linéaire des valeurs de production d'électricité qui sont mesurées pour les installations photovoltaïques voisines ;

$\beta_{1,i}$, pour i variant de 2 à N, étant le coefficient de la combinaison linéaire pour l'installation voisine i dans le modèle qui est utilisé pour estimer la production d'électricité de l'installation surveillée 1, et $\beta_{1,0}$ étant un coefficient constant de ce modèle pour l'installation surveillée 1 ; et
$\varepsilon_1(t)$ étant l'erreur du modèle pour l'installation surveillée 1, pour l'instant de mesure t.

Les coefficients $\beta_{1,i}$, avec i=0, 2,..., N, sont déterminés pour minimiser l'erreur totale, intégrée sur la période d'apprentissage :

$$\left\| \varepsilon_1 \right\| = \left\| P_1(t) - \left[ \beta_{1,0} + \sum_{i=2}^{i=N} \beta_{1,i} \cdot P_i(t) \right] \right\|$$

où les doubles barres verticales désignent une norme de mesure qui est effective sur toute la période d'apprentissage. Par exemple :

$$\left\| \varepsilon_1 \right\| = \sum_{t \in période\,d'apprentissage} \left[ P_1(t) - \beta_{1,0} - \sum_{i=2}^{i=N} \beta_{1,i} \cdot P_i(t) \right]^2$$

La fonction $\varepsilon_1(t)$ est alors une fonction aléatoire de valeur moyenne nulle.
Selon une caractéristique de l'invention, les coefficients $\beta_{1,i}$ pour i=0, 2,..., N sont tous positifs ou nuls, avec la contrainte que leur somme soit inférieure ou égale à un paramètre fixé du modèle, noté $\delta$, et qui un nombre réel strictement positif :

$$\beta_{1,0} \geq 0 \; pour \; i = 0, 2, ..., N \quad et \quad \left( \beta_{1,0} + \sum_{i=2}^{i=N} \beta_{1,i} \right) \leq \delta$$

Le but de la période d'apprentissage introduite ci-dessus est de déterminer les coefficients $\beta_{1,i}$ qui sont ainsi définis, pour i=0, 2,..., N, correspondant à l'étape S11 indiquée dans la figure 2. Ces coefficients sont ensuite utilisés à l'étape S12 pour estimer la production d'électricité de l'installation surveillée 1, pour des instants t qui sont postérieurs à la période d'apprentissage.
L'estimation de la production d'électricité par l'installation surveillée 1 pour l'instant t est :

$$\hat{P}_1(t) = \beta_{1,0} + \sum_{i=2}^{i=N} \beta_{1,i} \cdot P_i(t)$$

Ainsi, le modèle, aussi appelé fonction d'estimation, fournit une valeur estimée pour la production d'électricité de l'installation surveillée 1, pour un instant t, à partir des valeurs de production d'électricité des installations voisines 2,..., N qui sont relatives au même instant t.

Pour appliquer le premier critère de détection d'anomalie, un intervalle de confiance de prédiction est déterminé, séparément pour plusieurs instants t qui sont postérieurs à la période d'apprentissage, pour l'estimation de la production d'électricité de l'installation surveillée 1 qui est obtenue par le modèle précédent. Un tel intervalle de confiance peut être déterminé de la façon suivante, à partir des valeurs mesurées qui ont été collectées pendant la période d'apprentissage :

/i/ on sélectionne de façon aléatoire, avec remise, des instants t de la période d'apprentissage, pour lesquels les valeurs mesurées $P_i(t)$ ont été collectées, pour i=1, 2,..., N, en répétant le tirage un nombre de fois qui est identique au nombre d'instants de la période d'apprentissage qui ont été utilisés précédemment pour déterminer la fonction d'estimation $\hat{P}_1(t)$. On construit ainsi une nouvelle base de données d'apprentissage, à partir de laquelle une nouvelle fonction d'estimation est déterminée, de la même façon que décrite ci-dessus, de nouveau pour la production d'électricité de l'installation surveillée 1 ;

/ii/ on sélectionne ensuite, aussi de façon aléatoire, une valeur de l'erreur d'estimation qui est relative à la nouvelle fonction d'estimation ainsi construite, et relative à l'un des instants de la période d'apprentissage ; puis

/iii/ on calcule une nouvelle valeur d'estimation de la production d'électricité pour l'installation sélectionnée 1, comme la somme d'un résultat de la nouvelle fonction d'estimation déterminée à l'étape /i/, pour un instant postérieur à la période d'apprentissage, et de l'erreur d'estimation qui a été sélectionnée à l'étape /ii/.

Ces étapes /i/ à /iii/ sont répétées un nombre déterminé de fois, par exemple 500 fois, la première fois étant exécutée à partir de la fonction d'estimation $\hat{P}_1(t)$, pour obtenir une distribution statistique de valeurs d'estimation de la production d'électricité de l'installation sélectionnée 1 pour un même instant t, postérieur à la période d'apprentissage. Un intervalle de confiance est alors déterminé à partir de cette distribution statistique pour la production d'électricité de l'installation 1, pour l'instant t. Par exemple, l'intervalle de confiance à 95% est compris entre quantiles 0,025 et 0,975. /iv/ enfin, on détermine si la valeur qui a été réellement mesurée puis collectée à l'étape S13 pour la production d'électricité de l'installation 1 à l'instant t postérieur à la période d'apprentissage, est à l'intérieur de l'intervalle de confiance, ou à l'extérieur de celui-ci. Cette comparaison de la valeur mesurée avec les valeurs estimées, par l'intermédiaire de l'intervalle de confiance, constitue l'étape S14.

Les étapes /i/ à /iv/ sont ensuite appliquées à plusieurs instants t différents, tous postérieurs à la période d'apprentissage, puis on compte le nombre $N_1$ de ces instants, à l'intérieur d'une première période de test prédéfinie, pour lesquels les valeurs qui sont réellement mesurées pour la production d'électricité de l'installation 1 sont à l'extérieur des intervalles de confiance correspondant aux mêmes instants. Si ce nombre $N_1$ d'instants, pour lesquels surviennent des défauts de coïncidence entre le modèle et les valeurs mesurées pour l'installation 1, est supérieur à un premier seuil prédéfini, une anomalie est déclarée pour le fonctionnement de l'installation 1. Ainsi, le premier critère de détection d'anomalie est constitué par le niveau de confiance de prédiction (95% dans l'exemple cité), la première période de test et le premier seuil qui ont été utilisés dans le mode d'analyse qui vient d'être décrit, et qui a été appliqué aux valeurs mesurées de production d'électricité pour les installations 1, 2,...,N. Ce premier critère est mis en œuvre à l'étape S10. Il permet de prendre en compte des particularités de fonctionnement de l'installation qui est surveillée, puisque chaque fonction d'estimation qui a été utilisée a été déterminée à partir de ce fonctionnement de l'installation surveillée, tel que mesuré pendant la période d'apprentissage.

Un deuxième critère de détection d'anomalie pour le fonctionnement de l'installation surveillée concerne la comparaison de sa production d'électricité à celles d'une partie des installations voisines qui sont les moins efficaces.

Pour les installations voisines pour lesquelles le coefficient de combinaison linéaire $\beta_{1,i}$ n'est pas nul dans la fonction d'estimation $\hat{P}_1(t)$, l'indice i variant de 2 à N, on corrige leurs valeurs mesurées de production d'électricité par rapport à leurs valeurs respectives de puissance électrique nominale, et proportionnellement à celle de l'installation surveillée. Autrement dit, pour chaque instant t de la période d'apprentissage auquel la valeur de production d'électricité $P_i(t)$ a été mesurée puis collectée, on calcule la valeur corrigée de production d'électricité suivante, à partir de la valeur mesurée $P_i(t)$ :

$$pour\ i = 1,2,...,N : \quad P_{i\,corr}(t) = P_i(t) \cdot P_{1\,nom} / P_{i\,nom}$$

où $P_{i\,nom}$ est la valeur de puissance électrique nominale de l'installation photovoltaïque i, pour i variant de 1 à N. Ces calculs de valeurs corrigées correspondent à l'étape S21 de la figure 3.

Pour chaque installation voisine i, i variant de 2 à N, on détermine ensuite la valeur moyenne de sa production d'électricité corrigée sur la période d'apprentissage, à partir des valeurs de $P_{i\,corr}(t)$ : $<P_{i\,corr}(t)>_t$. Puis on sélectionne, à l'étape S22, une proportion ou un nombre prédéfini des installations voisines, correspondant à celles qui possèdent de telles valeurs moyennes les plus faibles. Par exemple, on sélectionne les 20% des installations voisines qui possèdent les valeurs les plus faibles pour la production d'électricité corrigée moyenne.

Enfin, à l'étape S23, on détermine le nombre $N_2$ d'instants pour lesquels les valeurs mesurées de production d'électricité ont été collectées, pendant la période d'apprentissage, et pour lesquels la valeur mesurée pour l'installation surveillée 1 est inférieure ou égale à la valeur moyenne des valeurs mesurées au même instant pour les installations voisines sélectionnées :

$$t \text{ dans la période d'apprentissage tel que } P_1(t) \leq \frac{1}{N_{s\acute{e}lection}} \cdot \sum_{i \in s\acute{e}lection \, parmi \, 2,...,N} P_i(t)$$

où $N_{s\acute{e}lection}$ est le nombre des installations photovoltaïques voisines les moins productives qui ont été sélectionnées.

Alors le deuxième critère de détection d'anomalie pour le fonctionnement de l'installation surveillée 1 est un deuxième seuil fixé, qui concerne le nombre d'instants $N_2$. Une anomalie est alors déclarée selon ce deuxième critère si le nombre d'instants $N_2$ est supérieur au deuxième seuil.

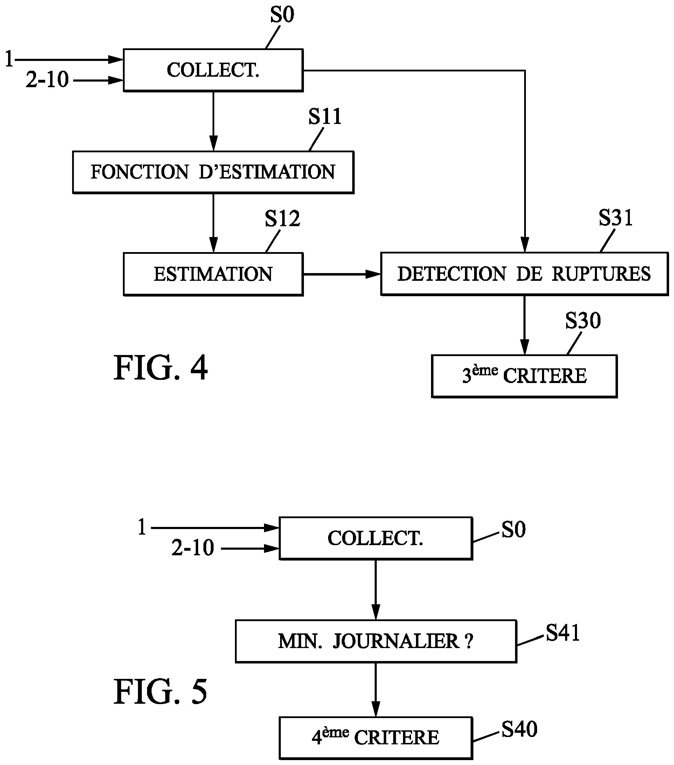

Un troisième critère de détection d'anomalie pour le fonctionnement de l'installation surveillée est fondé sur l'existence de ruptures de statistique dans les différences $P_1(t)-\hat{P}_1(t)$, ces différentes étant calculées pour les instants de mesure t de la période d'apprentissage. Les étapes S11 et S12 de la figure 4 sont une reprise de celles de la figure 1.

Puis à l'étape S31, une méthode détection de ruptures de statistique est appliquée aux différences $P_1(t)-\hat{P}_1(t)$. Pour cela, on peut appliquer un algorithme de programmation dynamique sur la période d'apprentissage. Un tel algorithme découpe la période d'apprentissage en durées de marche («step durations» en anglais) successives, chacune étant associée à une valeur de moyenne temporelle pour la différence $P_1(t)-\hat{P}_1(t)$, calculée sur cette durée de marche, qui est différente de la valeur de moyenne temporelle associée à la durée de marche suivante, et aussi différente de celle associée à la durée de marche précédente. En outre, chaque durée de marche est déterminée de sorte que la variance de la différence $P_1(t)-\hat{P}_1(t)$ soit minimale à l'intérieur de cette durée de marche. De telles durées de marche peuvent être déterminées en utilisant par exemple une méthode de nuées dynamiques, ou une méthode de classification ascendante hiérarchique, connues de l'Homme du métier. Les durées de marche dont les valeurs de moyenne temporelle sont négatives pour la différence $P_1(t)-\hat{P}_1(t)$ sont comptées, et leur nombre est comparé à un troisième seuil prédéfini à l'étape S30. Une anomalie est alors déclarée selon le troisième critère si ce nombre est supérieur au troisième seuil.

La valeur de moyenne temporelle la plus négative qui a été obtenue ainsi pour la différence $P_1(t)-\hat{P}_1(t)$, et les instants de mesure t de la durée de marche correspondante, ou bien une heure moyenne de cette durée de marche à valeur de moyenne temporelle la plus négative, peuvent être utilisés pour identifier une cause probable de l'anomalie, comme cela sera décrit plus loin.

Enfin, un quatrième critère de détection d'anomalie pour le fonctionnement de l'installation surveillée consiste à rechercher si un minimum apparaît pour sa production d'électricité telle que mesurée, de façon répétitive pendant plusieurs jours successifs, à une même heure de chaque jour pendant une période quotidienne de luminosité solaire, appelée période diurne. Pour cela, un instant de mesure t est recherché pendant la période diurne de chaque jour, par exemple entre 10 heures et 16 heures, pour lequel $P_1(t_j)-P_1(t_{j-1})<0$ et $P_1(t_{j+1})-P_1(t_j)>0$, où $t_{j-1}$, $t_j$ et $t_{j+1}$ désignent trois instants successifs de la période diurne auxquels la production d'électricité de l'installation surveillée 1 a été mesurée. Cette étape est désignée par la référence S41 dans la figure 5. On recherche alors si la même heure $t_j$ de minimum de production électrique mesurée se reproduit pour plusieurs jours successifs, éventuellement avec un écart de tolérance pour les instants $t_j$ qui sont relatifs à des jours différents, jusqu'à atteindre un nombre minimal de jours prédéfini. Une anomalie est alors encore déclarée si ce nombre minimal de jours, formant un quatrième seuil, est atteint (étape S40). Un tel quatrième critère peut être appliqué à une période de test qui est comprise dans la période d'apprentissage, mais aussi qui s'étend après celle-ci.

Une cause probable d'anomalie peut alors être identifiée à partir de celui ou ceux des critères de détection d'anomalie qui sont satisfaits, et éventuellement en prenant aussi en compte des informations supplémentaires qui ont été obtenues à partir des valeurs mesurées de production d'électricité. Une telle identification de cause probable d'anomalie peut être effectuée automatiquement, notamment d'après un arbre d'apprentissage qui établit une corrélation entre les critères satisfaits et des causes d'anomalies possibles.

A titre d'illustration, le premier critère peut indiquer que les valeurs $P_i(t)$ de production d'électricité qui ont été mesurées pour l'installation photovoltaïque surveillée sont en dehors de l'intervalle de confiance à 95% déterminé pour la fonction d'estimation $\hat{P}_1(t)$. Le deuxième critère peut indiquer un défaut de production électrique de 3 kW (kilowatt) entre 12 heures et 19 heures, par rapport aux 20% des installations photovoltaïques voisines qui sont les moins efficaces. Et le troisième critère peut corroborer les deux précédents en indiquant que cette durée de 12 heures à 19 heures correspond à une seule durée de marche pour laquelle la différence entre valeurs mesurées et valeurs estimées pour l'installation surveillée présente une valeur de moyenne temporelle qui est négative. Enfin, le quatrième critère peut ne révéler aucun minimum pendant cette durée pour la production d'électricité mesurée de l'installation surveillée. L'apprentissage pour corréler des causes d'anomalies probables à ces résultats pour les quatre critères peut alors proposer qu'une accumulation de détritus se soit produite sur les panneaux de l'installation surveillée, et nécessite qu'une vérification soit diligentée sur site, avec un nettoyage éventuel des panneaux.

De façon générale, le quatrième critère est particulièrement adapté pour révéler la présence d'un élément environnemental à proximité de l'installation surveillée, qui produit une ombre sur ses panneaux pendant une durée limitée à l'intérieur de la période d'ensoleillement quotidienne. Typiquement, une telle ombre peut être produite nouvellement par un arbre voisin à partir du printemps. Une intervention d'élagage de l'arbre peut alors être diligentée.

D'autres causes d'anomalies de fonctionnement de l'installation photovoltaïque qui est surveillée, qui peuvent être détectées et identifiées grâce à l'invention, sont sans limitation : un ombrage par une cheminée d'un édifice voisin nouvellement construit, ou par pylône de téléphonie mobile nouvellement implanté, un défaut dans la transmission ou la collecte des valeurs mesurées, un dysfonctionnement du panneau photovoltaïque, un dysfonctionnement du système de conversion en courant alternatif de la production d'électricité de l'installation surveillée, etc. De telles causes d'anomalies peuvent constituer des résultats de l'arbre d'apprentissage.

Il est entendu que l'invention peut être reproduite en en modifiant des aspects secondaires par rapport à la description détaillée qui vient d'être fournie. En particulier, des variations peuvent être introduites dans la méthode de détermination qui est utilisée pour la fonction d'estimation de la production d'électricité d'une installation photovoltaïque à partir des valeurs qui sont mesurées pour des installations voisines. En particulier, la variante bayésienne de la méthode LASSO peut être utilisée avantageusement.

## Revendications

1.  Procédé de détection à distance d'une anomalie qui affecte un fonctionnement d'une installation photovoltaïque de production d'électricité, dite installation surveillée (1), comprenant au moins une étape lors de laquelle des valeurs de production d'électricité mesurées pour l'installation surveillée sont comparées avec des valeurs qui sont déduites de mesures effectuées pour plusieurs autres installations photovoltaïques de production d'électricité, dites installations voisines (2-10) et différentes de l'installation surveillée,
    ledit procédé comprenant les étapes suivantes :

    /1/ pendant une période d'apprentissage, collecter les valeurs de production d'électricité mesurées pour l'installation surveillée (1) et pour les installations voisines (2-10) ;
    /2/ à partir des valeurs de production d'électricité mesurées pour lesdites installations voisines (2-10), déterminer une fonction d'estimation de la production d'électricité pour l'installation surveillée (1), ayant le temps comme variable, en minimisant un écart total calculé sur la période d'apprentissage entre les valeurs de production d'électricité mesurées pour l'installation surveillée et des valeurs estimées obtenues par la fonction d'estimation ;
    /3/ pour au moins un instant postérieur à la période d'apprentissage, collecter de nouvelles valeurs de production d'électricité mesurées pour l'installation surveillée (1) et pour chaque installation voisine (2-10) ;
    /4/ pour chaque instant postérieur à la période d'apprentissage qui est concerné par l'étape /3/, calculer au moins une valeur estimée de production d'électricité en utilisant la fonction d'estimation déterminée à l'étape /2/ ; et
    /5/ déclarer qu'une anomalie est détectée dans le fonctionnement de l'installation surveillée (1) à partir d'une comparaison, pour au moins un instant postérieur à la période d'apprentissage, entre la valeur estimée de production d'électricité qui a été calculée à l'étape /4/ et la nouvelle valeur de production d'électricité mesurée qui a été collectée à l'étape /3/ pour l'installation surveillée.

2.  Procédé selon la revendication 1, comprenant en outre de rechercher si plusieurs critères de détection d'anomalie sont satisfaits par les valeurs de production d'électricité qui sont mesurées pour l'installation surveillée (1), et en fonction de ceux desdits critères qui sont satisfaits, proposer au moins une cause possible pour l'anomalie, notamment en utilisant une base d'apprentissage qui associe des causes d'anomalies différentes à des combinaisons différentes des critères satisfaits.

3.  Procédé selon la revendication 1 ou 2, comprenant en outre de commander ou réaliser une intervention de maintenance ou de modification environnementale pour l'installation surveillée (1), sur un site ou dans un voisinage de ladite installation surveillée, si une anomalie est détectée.

4.  Procédé selon l'une quelconque des revendications précédentes, suivant lequel la fonction d'estimation déterminée à l'étape /2/ comprend une combinaison linéaire de fonctions de production d'électricité qui sont relatives respectivement aux installations voisines (2-10), et qui correspondent aux valeurs de production d'électricité mesurées pour lesdites installations voisines pendant la période d'apprentissage, avec des facteurs de combinaison linéaire qui sont tous positifs ou nuls, et avec une somme desdits facteurs de combinaison linéaire qui est inférieure ou égale à une valeur maximale fixée, lesdits facteurs de combinaison linéaire étant déterminés pour minimiser l'écart total calculé sur la période d'apprentissage entre les valeurs de production d'électricité mesurées pour l'installation surveillée (1) et les valeurs estimées.

5. Procédé selon l'une quelconque des revendications précédentes, suivant lequel la comparaison de l'étape /5/ est effectuée en exécutant les sous-étapes suivantes :

/5-1/ déterminer un intervalle de confiance de prédiction pour chaque valeur estimée de production d'électricité qui a été calculée à l'étape /4/ ;
/5-2/ déterminer si la nouvelle valeur de production d'électricité mesurée qui a été collectée à l'étape /3/ pour l'installation surveillée (1), et qui correspond à un même instant que la valeur estimée de la sous-étape /5-1/, est à l'extérieur de l'intervalle de confiance de prédiction relatif à ladite valeur estimée ; et
/5-3/ répéter les sous-étapes /5-1/ et /5-2/ pour plusieurs instants à l'intérieur d'une première période de test, puis compter un premier nombre d'instants dans la première période de test, pour chacun desquels instants la nouvelle valeur de production d'électricité mesuré pour l'installation surveillée (1) est à l'extérieur de l'intervalle de confiance de prédiction correspondant,

et suivant lequel une anomalie dans le fonctionnement de l'installation surveillée (1) est déclarée si le premier nombre d'instants est supérieur à un premier seuil prédéfini.

6. Procédé selon l'une quelconque des revendications précédentes, comprenant en outre les étapes suivantes :

/6/ corriger les valeurs de production d'électricité mesurées pour chaque installation voisine (2-10) par rapport à une puissance électrique nominale de ladite installation voisine, et proportionnellement à une puissance électrique nominale de l'installation surveillée (1) ;
/7/ sélectionner un sous-ensemble parmi les installations voisines (2-10), correspondant à une proportion prédéterminée desdites installations voisines et formé par celles desdites installations voisines qui possèdent des productions d'électricité les plus basses, déterminées à partir des valeurs de production d'électricité mesurées puis corrigées ; et
/8/ compter un second nombre d'instants dans une deuxième période de test, pour chacun desquels instants la valeur de production d'électricité qui est mesurée pour l'installation surveillée (1) est inférieure ou égale à une valeur moyenne des valeurs de production d'électricité mesurées puis corrigées du sous-ensemble d'installations voisines (2-10),

et suivant lequel une anomalie dans le fonctionnement de l'installation surveillée (1) est aussi déclarée si le second nombre d'instants est supérieur à un deuxième seuil prédéfini.

7. Procédé selon l'une au moins des revendications précédentes, comprenant en outre les étapes suivantes :

/9/ pour plusieurs instants à l'intérieur d'une troisième période de test, calculer des résultats de soustraction d'une valeur de production d'électricité qui est calculée en utilisant la fonction d'estimation déterminée à l'étape /2/, à la valeur de production d'électricité mesurée pour l'installation surveillée (1), lesdites valeurs pour calculer chaque résultat de soustraction étant relatives à un même instant dans la troisième période de test ;
/10/ déterminer des durées de marche, pendant chacune desquelles durées de marche les résultats de soustraction présentent une valeur de moyenne temporelle qui est différente de celles de la durée de marche précédente et de la durée de marche suivante, et avec une variance desdits résultats de soustraction qui est minimale à l'intérieur de chaque durée de marche ; et
/11/ compter un nombre de durées de marche à l'intérieur de la troisième période de test, pour chacune desquelles durées de marche la valeur de moyenne temporelle des résultats de soustraction est négative,

et suivant lequel une anomalie dans le fonctionnement de l'installation surveillée (1) est aussi déclarée si le nombre de durées de marche à valeurs de moyenne temporelle négatives pour les résultats de soustraction est supérieur à un troisième seuil prédéfini.

8. Procédé selon l'une quelconque des revendications précédentes, comprenant en outre les étapes suivantes :

/12/ rechercher s'il existe un instant diurne auquel un minimum se produit pour les valeurs de production d'électricité qui sont mesurées pour l'installation surveillée (1), pour au moins un jour de fonctionnement de ladite installation surveillée ; et

/13/ rechercher si un minimum se produit aussi pendant plusieurs jours successifs après le jour identifié à l'étape /12/, pour les valeurs de production d'électricité qui sont mesurées pour l'installation surveillée (1), chaque fois dans un intervalle de temps prédéfini autour de l'instant diurne identifié à ladite étape /12/, et compter le nombre de jours successifs pour lesquels un tel minimum se produit,

et suivant lequel une anomalie dans le fonctionnement de l'installation surveillée (1) est aussi déclarée si le nombre de jours successifs compté à l'étape /13/ est supérieur à un quatrième seuil prédéfini.

9. Système de surveillance d'au moins une installation photovoltaïque, dite installation surveillée (1), comprenant :

- des moyens de communication (100) pour collecter des valeurs de production d'électricité qui ont été mesurées pour ladite installation surveillée (1) et pour d'autres installations photovoltaïques, dites installations voisines (2-10), différentes de l'installation surveillée ; et
- des moyens de calcul (101) pour mettre en œuvre un procédé de détection à distance d'une anomalie qui affecte un fonctionnement de l'installation surveillée (1), ledit procédé étant conforme à l'une quelconque des revendications précédentes.

**Patentansprüche**

1. Verfahren zur Fernerkennung einer Anomalie, die den Betrieb einer als überwachte Anlage (1) bezeichneten photovoltaischen Stromerzeugungsanlage beeinträchtigt, mit mindestens einem Schritt, bei dem für die überwachte Anlage gemessene Stromerzeugungswerte mit Werten verglichen werden, die aus Messungen abgeleitet sind, die für mehrere andere, als Nachbaranlagen (2-10) bezeichnete und von der überwachten Anlage verschiedene photovoltaische Stromerzeugungsanlagen durchgeführt wurden, wobei das Verfahren die folgenden Schritte umfasst:

/1/ während einer Lernperiode werden die für die überwachte Anlage (1) und für die Nachbaranlagen (2-10) gemessenen Stromerzeugungswerte erfasst;

/2/ ausgehend von den für die genannten Nachbaranlagen (2-10) gemessenen Stromerzeugungswerten wird eine Schätzfunktion der Stromerzeugung für die überwachte Anlage (1), die die Zeit als Variable hat, durch Minimierung einer über die Lernperiode berechneten Gesamtabweichung zwischen den gemessenen Stromerzeugungswerten für die überwachte Anlage und den durch die Schätzfunktion erhaltenen Schätzwerten ermittelt;

/3/ mindestens einmal nach der Lernperiode werden neue Stromerzeugungswerte erfasst, die für die überwachte Anlage (1) und für jede Nachbaranlage (2-10) gemessen wurden;

/4/ für jeden Zeitpunkt nach der Lernperiode gemäß Schritt /3/ wird mindestens ein Schätzwert der Stromerzeugung unter Verwendung der in Schritt /2/ ermittelten Schätzfunktion berechnet; und

/5/ es wird gemeldet, dass anhand eines Vergleichs zwischen dem Schätzwert der Stromerzeugung, der in Schritt /4/ berechnet wurde, und dem neuen gemessenen Stromerzeugungswert, der in Schritt /3/ für die überwachte Anlage erfasst wurde, mindestens einmal nach der Lernperiode eine Anomalie im Betrieb der überwachten Anlage (1) festgestellt wurde.

2. Verfahren nach Anspruch 1, bei dem ferner untersucht wird, ob verschiedene Kriterien für die Erkennung einer Anomalie durch die Stromerzeugungswerte, die für die überwachte Anlage (1) gemessen werden, erfüllt sind, und bei dem in Abhängigkeit davon, welche der Kriterien erfüllt sind, mindestens eine mögliche Ursache für die Anomalie vorgeschlagen wird, insbesondere unter Verwendung einer Lernbasis, die verschiedene Ursachen für Anomalien verschiedenen Kombinationen der erfüllten Kriterien zuordnet.

3. Verfahren nach Anspruch 1 oder 2, bei dem ferner eine Instandhaltungsmaßnahme oder eine Modifikation der Umgebung der überwachten Anlage (1) an einem Standort oder in der Nähe der überwachten Anlage veranlasst oder durchgeführt wird, wenn eine Anomalie festgestellt wird.

4. Verfahren nach einem der vorhergehenden Ansprüche, wobei die in Schritt /2/ ermittelte Schätzfunktion eine lineare Kombination von Stromerzeugungsfunktionen, die sich jeweils auf die Nachbaranlagen (2-10) beziehen und die den gemessenen Stromerzeugungswerten für die Nachbaranlagen während der Lernperiode entsprechen, mit Linearkombinationsfaktoren umfasst, die alle positiv oder Null sind, und mit einer Summe der Linearkombinationsfaktoren, die kleiner oder gleich einem festen Maximalwert ist, wobei die Linearkombinationsfaktoren so festgelegt werden, dass die über die Lernperiode berechnete Gesamtabweichung zwischen den gemessenen Stromerzeugungswerten für die überwachte Anlage (1) und den Schätzwerten minimiert wird.

5. Verfahren nach einem der vorhergehenden Ansprüche, wobei der Vergleich von Schritt /5/ durch Ausführen der folgenden Teilschritte erfolgt:

/5-1/ Ermitteln eines Vorhersagekonfidenzintervalls für jeden Schätzwert der Stromerzeugung, der in Schritt /4/ berechnet wurde;
/5-2/ Ermitteln, ob der neue gemessene Stromerzeugungswert, der in Schritt /3/ für die überwachte Anlage (1) erfasst wurde und der demselben Zeitpunkt wie der Schätzwert von Teilschritt /5-1/ entspricht, außerhalb des Vorhersagekonfidenzintervalls für den genannten Schätzwert liegt; und
/5-3/ Wiederholen der Teilschritte /5-1/ und /5-2/ für eine Vielzahl von Zeitpunkten innerhalb einer ersten Testperiode und dann Zählen einer ersten Anzahl von Zeitpunkten innerhalb der ersten Testperiode, für die jeweils der neue gemessene Stromerzeugungswert für die überwachte Anlage (1) außerhalb des entsprechenden Vorhersagekonfidenzintervalls liegt,

und gemäß dem eine Anomalie im Betrieb der überwachten Anlage (1) gemeldet wird, wenn die erste Anzahl von Zeitpunkten größer ist als ein erster vordefinierter Schwellenwert.

6. Verfahren nach einem der vorhergehenden Ansprüche, das ferner die folgenden Schritte umfasst:

/6/ Korrektur der gemessenen Stromerzeugungswerte für jede Nachbaranlage (2-10) in Bezug auf eine elektrische Nennleistung der genannten Nachbaranlage und proportional zu einer elektrischen Nennleistung der überwachten Anlage (1);
/7/ Auswählen einer Untergruppe der Nachbaranlagen (2-10), die einem vorbestimmten Anteil der Nachbaranlagen entspricht und durch diejenigen der Nachbaranlagen mit den niedrigsten Stromerzeugungswerten gebildet wird, die anhand der gemessenen und dann korrigierten Stromerzeugungswerte ermittelt wurden; und
/8/ Zählen einer zweiten Anzahl von Zeitpunkten in einer zweiten Testperiode, wobei für jeden dieser Zeitpunkte der für die überwachte Anlage (1) gemessene Stromerzeugungswert kleiner oder gleich einem Mittelwert der gemessenen und dann korrigierten Stromerzeugungswerte der Untergruppe der benachbarten Anlagen (2-10) ist,

und gemäß dem eine Anomalie im Betrieb der überwachten Anlage (1) ebenfalls gemeldet wird, wenn die zweite Anzahl von Zeitpunkten größer ist als ein zweiter vordefinierter Schwellenwert.

7. Verfahren nach mindestens einem der vorhergehenden Ansprüche, das ferner die folgenden Schritte umfasst:

/9/ für eine Vielzahl von Zeitpunkten innerhalb einer dritten Testperiode werden Ergebnisse der Subtraktion eines Stromerzeugungswertes, der unter Verwendung der in Schritt /2/ ermittelten Schätzfunktion berechnet wird, von dem gemessenen Stromerzeugungswert für die überwachte Anlage (1) berechnet, wobei sich die Werte für die Berechnung jedes Subtraktionsergebnisses auf denselben Zeitpunkt in der dritten Testperiode beziehen;
/10/ Ermitteln von Laufzeiten, wobei während jeder dieser Laufzeiten die Subtraktionsergebnisse einen zeitlichen Mittelwert darstellen, der sich von denen der vorhergehenden Laufzeit und der nachfolgenden Laufzeit unterscheidet, und mit einer Varianz der Subtraktionsergebnisse, die innerhalb jeder Laufzeit minimal ist; und
/11/ Zählen einer Anzahl von Laufzeiten innerhalb der dritten Testperiode, wobei für jede dieser Laufzeiten der zeitliche Mittelwert der Subtraktionsergebnisse negativ ist,

und wonach eine Anomalie im Betrieb der überwachten Anlage (1) auch dann gemeldet wird, wenn die Anzahl der Laufzeiten mit negativen zeitlichen Mittelwerten für die Subtraktionsergebnisse größer ist als ein dritter vordefinierter Schwellenwert.

8. Verfahren nach einem der vorhergehenden Ansprüche, das ferner die folgenden Schritte umfasst:

/12/ Untersuchen, ob es einen Tageszeitpunkt gibt, an dem ein Minimum für die Stromerzeugungswerte auftritt, die für die überwachte Anlage (1) gemessen werden, und zwar für mindestens einen Betriebstag der überwachten Anlage; und

/13/ Untersuchen, ob auch an mehreren aufeinanderfolgenden Tagen nach dem in Schritt /12/ identifizierten Tag ein Minimum für die Stromerzeugungswerte auftritt, die für die überwachte Anlage (1) gemessen werden, und zwar jedes Mal innerhalb eines vordefinierten Zeitintervalls um den in Schritt /12/ identifizierten Tageszeitpunkt herum, und Zählen der Anzahl der aufeinanderfolgenden Tage, an denen ein solches Minimum auftritt,

und bei dem eine Anomalie im Betrieb der überwachten Anlage (1) ebenfalls gemeldet wird, wenn die Anzahl der in Schritt /13/ gezählten aufeinanderfolgenden Tage größer ist als ein vierter vordefinierter Schwellenwert.

9. System zur Überwachung mindestens einer Photovoltaikanlage, der sogenannten überwachten Anlage (1), bestehend aus:

- Kommunikationseinrichtungen (100) zum Erfassen von Stromerzeugungswerten, die für die überwachte Anlage (1) und für andere, von der überwachten Anlage verschiedene Photovoltaikanlagen, sogenannte Nachbaranlagen (2-10), gemessen wurden; und
- Berechnungseinrichtungen (101) zur Durchführung eines Verfahrens zur Ferndetektion einer Anomalie, die einen Betrieb der überwachten Anlage (1) beeinträchtigt, wobei das Verfahren einem der vorhergehenden Ansprüche entspricht.

**Claims**

1. A method for remote detection of an anomaly that affects an operation of a photovoltaic installation for producing electricity, referred to as monitored installation (1), comprising at least one step during which electricity production values measured for the monitored installation are compared with values that are deduced from measurements performed for several other photovoltaic installations for producing electricity, referred to as neighbouring installations (2-10) and different from the monitored installation, said method comprising the following steps:

/1/ during a learning period, collecting the electricity production values measured for the monitored installation (1) and for the neighbouring installations (2-10);
/2/ from the electricity production values measured for said neighbouring installations (2-10), determining a function for estimating the electricity production for the monitored installation (1), having time as variable, by minimising a total deviation calculated over the learning period between the electricity production values measured for the monitored installation and estimated values obtained by the estimation function;
/3/ for at least one time point subsequent to the learning period, collecting new electricity production values measured for the monitored installation (1) and for each neighbouring installation (2-10);
/4/ for each time point subsequent to the learning period that is concerned by step /3/, calculating at least one estimated electricity production value using the estimation function determined at step /2/; and
/5/ declaring that an anomaly is detected in the operation of the monitored installation (1) from a comparison for at least one time point subsequent to the learning period, between the estimated electricity production value that has been calculated at step /4/ and the new measured electricity production value that has been collected at step /3/ for the monitored installation.

2. The method according to claim 1, further comprising searching for whether several anomaly detection criteria are met by the electricity production values that are measured for the monitored installation (1), and depending on those of said criteria that are met, suggesting at least one possible cause for the anomaly, in particular using a learning base that associates different causes of anomalies to different combinations of the met criteria.

3. The method according to claim 1 or 2, further comprising controlling or carrying out a maintenance or environmental modification intervention for the monitored installation (1), on one site or in a vicinity of said monitored installation, if an anomaly is detected.

4. The method according to any one of the preceding claims, wherein the estimation function determined in step /2/ comprises a linear combination of electricity production functions which relate respectively to the neighbouring installations (2-10), and which correspond to the electricity production values measured for said neighbouring installations over the learning period, with linear combination factors that are all positive or zero, and with a sum of said linear combination factors that is lower than or equal to a set maximum value, said linear combination factors being determined so as to minimise the total deviation calculated over the learning period between the electricity production values measured for the monitored installation (1) and the estimated values.

5. The method according to any one of the preceding claims, wherein the comparison of step /5/ is performed by executing the following substeps:

> /5-1/ determining a prediction confidence interval for each estimated electricity production value that has been calculated at step /4/;
> /5-2/ determining whether the new measured electricity production value that has been collected at step /3/ for the monitored installation (1), and which corresponds to the same time point as the estimated value of substep /5-1/, is outside the prediction confidence interval relating to said estimated value; and
> /5-3/ repeating substeps /5-1/ and /5-2/ for several time points within a first test period, then counting a first number of time points in the first test period, for each time point of which the new electricity production value measured for the monitored installation (1) is outside the corresponding prediction confidence interval,

and wherein an anomaly in the operation of the monitored installation (1) is declared if the first number of time points is larger than a predefined first threshold.

6. The method according to any one of the preceding claims, further comprising the following steps:

> /6/ correcting the electricity production values measured for each neighbouring installation (2-10) with regards to a nominal electric power of said neighbouring installation, and proportionally to a nominal electric power of the monitored installation (1);
> /7/ selecting a subset from the neighbouring installations (2-10), corresponding to a predetermined proportion of said neighbouring installations and formed by those from said neighbouring installations that have the lowest electricity productions, determined from the measured and then corrected electricity production values; and
> /8/ counting a second number of time points in a second test period, for each time point of which the electricity production value that is measured for the monitored installation (1) is lower than or equal to an average value of the measured and then corrected electricity production values of the subset of neighbouring installations (2-10),

and whereby an anomaly in the operation of the monitored installation (1) is also declared if the second number of time points is larger than a predefined second threshold.

7. The method according to any one of the preceding claims, further comprising the following steps:

> /9/ for several time points within a third test period, calculating results of subtraction of an electricity production value that is calculated using the estimation function determined in step /2/, from the electricity production value measured for the monitored installation (1), said values for calculating each subtraction result relating to the same time point in the third test period;
> /10/ determining running durations, over each of said running durations the subtraction results have a time average value that is different from those of the previous running duration and from the next running duration, and with a variance of said subtraction results that is minimum within each running duration; and
> /11/ counting a number of running durations within the third test period, for each running duration of which the time average value of the subtraction results is negative,

and whereby an anomaly in the operation of the monitored installation (1) is also declared if the number of running durations with negative time average values for the subtraction results is larger than a predefined third threshold.

8. The method according to any one of the preceding claims, further comprising the following steps:

> /12/ searching for whether there is a diurnal time point at which a minimum is reached for the electricity production values that are measured for the monitored installation (1), for at least one operating day of said monitored installation; and
> /13/ searching for whether a minimum is also reached over several successive days after the day identified in step /12/, for the electricity production values that are measured for the monitored installation (1), each time in a predefined time interval around the diurnal time point identified a said step /12/, and counting the number of successive days for which such a minimum is reached,

and whereby an anomaly in the operation of the monitored installation (1) is also declared if the number of successive days counted at step /13/ is larger than a predefined fourth threshold.

9. A system for monitoring at least one photovoltaic installation, referred to as monitored installation (1), comprising:

- communication means (100) for collecting electricity production values that have been measured for said monitored installation (1) and for other photovoltaic installations, referred to as neighbouring installations (2-10), different from the monitored installation; and
- calculation means (101) for implementing a method for remote detection of an anomaly that affects an operation of the monitored installation (1), said method being in accordance with any one of the preceding claims.

FIG. 1

RECEP. & MEM. —100

ANALYS. —101

1 ──────────────→ ┌─────────────┐
                  │   COLLECT.   │ ──── S0
2-10 ────────────→└─────────────┘
                         │
                         ↓
┌──────────────────────────┐        ┌──────────────┐
│  FONCTION  D'ESTIMATION   │ ────→  │  ESTIMATION  │ ──── S12
└──────────────────────────┘        └──────────────┘
            S11                             │
                                            ↓
        ┌─────────────┐            ┌─────────────────┐
        │   COLLECT.   │ ───────→  │   COMPARAISON   │ ──── S14
        └─────────────┘            └─────────────────┘
               S13                         │
                                           ↓
                                  ┌──────────────────┐
                                  │  1ᵉʳ CRITERE     │ ──── S10
                                  └──────────────────┘

# FIG. 2

1 ──────────────→ ┌─────────────┐
                  │   COLLECT.   │ ──── S0
2-10 ────────────→└─────────────┘
                         │
                         ↓
                  ┌─────────────┐
                  │   CORRECT.   │ ──── S21
                  └─────────────┘
                         │
                         ↓
                  ┌─────────────┐
                  │   SELECT.    │ ──── S22
                  └─────────────┘
                         │
                         ↓
                  ┌─────────────┐
                  │   COMPT.     │ ──── S23
                  └─────────────┘
                         │
                         ↓
# FIG. 3          ┌──────────────────┐
                  │  2ᵉᵐᵉ CRITERE    │ ──── S20
                  └──────────────────┘

S0

1 →
2-10 → COLLECT.

↓

FONCTION D'ESTIMATION    S11

↓

ESTIMATION    S12    →    DETECTION DE RUPTURES    S31

↓

3ème CRITERE    S30

FIG. 4

1 →
2-10 → COLLECT.    S0

↓

MIN. JOURNALIER ?    S41

↓

4ème CRITERE    S40

FIG. 5

**EP 3 721 549 B1**

## RÉFÉRENCES CITÉES DANS LA DESCRIPTION

**Documents brevets cités dans la description**

- EP 3016277 A